# EUROPEAN PATENT SPECIFICATION

(11) **EP 1 236 854 B1**
(45) Date of publication and mention of the grant of the patent: **15.02.2006**
(21) Application number: 00971743.0
(22) Date of filing: 02.11.2000
(51) Int. Cl.: B23Q 11/08, E05D 15/40, E05D 15/26

(54) **DOOR**
TÜR
PORTE

(30) Priority: 05.11.1999 JP 31513799
(43) Date of publication of application: 04.09.2002
(73) Proprietor: MATSUSHITA ELECTRIC INDUSTRIAL CO., LTD., Kadoma-shi, Osaka 571-8501 (JP)
(72) Inventor: SASAKI, Takashi, Higashiyatsushiro-gun,Yamanashi 406-0034 (JP); TANNO, Tadashi, Nakakoma-gun, Yamanashi 400-0115 (JP)
(74) Representative: Eisenführ, Speiser & Partner
(86) International application number: PCT/JP2000/007722
(87) International publication number: WO 2001/034930

(56) References cited:
- GB-A- 1 175 773
- JP-A- 10 256 778
- JP-A- 11 006 370
- JP-A- 11 503 799
- JP-U- 60 031 462
- JP-U- 64 005 484
- JP-Y2- 4 042 425
- US-A- 1 562 600

## Description

### FIELD OF THE INVENTION

The present invention relates to a door for opening and closing an exterior cover of an apparatus. More particularly, the present invention relates to a door used for an exterior cover of an apparatus, such as a component mounting apparatus covered by a housing.

### BACKGROUND ART

With respect to a door used for an exterior cover of an apparatus in recent years, on one hand, the size of a window portion made of a transparent plastic plate or the like becomes larger for the purpose of improving visibility for viewing inside of a housing, while on the other hand, it is required to achieve improvement in operability and safety. Accordingly, such a door needs to meet conflicting demands in that the door has to be strong yet light in weight, and capable of easy handling for opening and closing.

Known as a conventional technique regarding a door used for such a purpose is the one, for example, described in Japanese Utility Model No. 3043864, although it may be categorized in a slightly different technical field from the present invention. One example of a door according to this conventional technique is described with reference to the appended drawings.

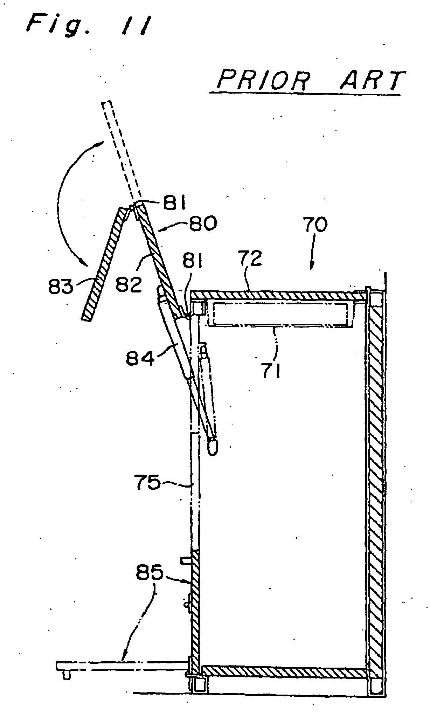

Fig. 11 shows a cross section of a cold insulation container used for vehicles incorporating a door according to the conventional technique. In Fig. 11, a refrigerator 70 formed by a box-shaped housing includes a rack 71 in its upper portion, and a top lid 72 covering the rack 71. In use, the top lid 72 is opened and dry-ice is put on the rack 71 so that the dry-ice cools foodstuff stored inside the refrigerator 70. A vertically folding door 80 and a pulling door 85 are disposed on the upper and lower sides, respectively, in a retrieving section 75 in the front of the refrigerator 70 (on the left-hand side of Fig. 11), for the purpose of taking out foodstuff stored inside the refrigerator 70. The vertically folding door 80 further includes an upper door 82 attached to a casing of the refrigerator via a hinge 81, and a lower door 83 attached to the upper door 82 via another hinge 81.

To take out a foodstuff stored inside, the vertically folding door 80 is flung upward to open the retrieving section 75. At this stage, the vertically folding door 80 is folded into two pieces and held by a damper 84. The pulling door 85 on the lower side is used in order to take out foodstuff stored in a lower portion in particular or clean inside the refrigerator 70, and the vertically folding door 80 is usually opened and closed to take out or store foodstuff in a middle and upper portion.

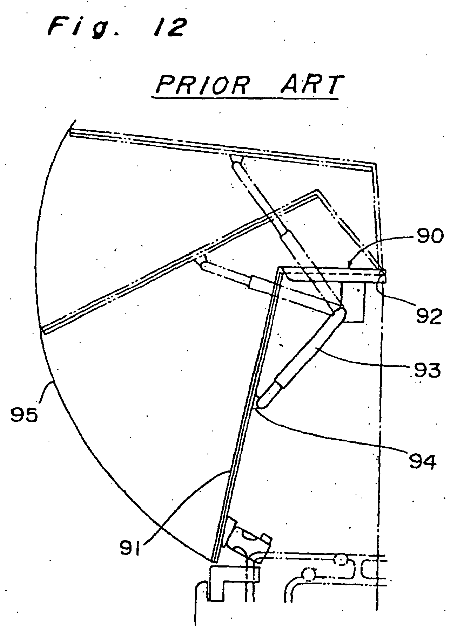

An example of a door used as an exterior cover of an apparatus is shown in Fig. 12. Fig. 12 shows a cross section of a door 90 and a surrounding area only. In Fig. 12, denoted by 91 is a door formed in the shape of the letter "L." The door 91 is rotatably supported by a main body of the apparatus (not shown) via a hinge 92 so as to be opened and closed. Further, a window portion made from a transparent plastic plate or the like (not shown in Fig. 12) is formed in the front surface of said door 91 (the left-hand side of Fig. 12) through which the inside may be observed. Denoted by 93 is a damper. The damper 93 is rotatably supported by the door 91 via a bracket 94, and structured to support the weight of the door 90 when it is opened. The curve 95 denotes a trajectory illustrating opening and closing of the door 90 structured as above.

Each one of the doors according to the conventional techniques described above has problems. First, in the case of the structure of the door 70 of the refrigerator shown in Fig. 11, an opening/closing trajectory of the vertical folding door 80 does not remain constant. The lower door 83 of the door 80, in particular, is not restricted by anything during opening and closing, and therefore, it may move over arbitrary trajectories. When used as a door of a housing for covering a component mounting apparatus in particular, such a door has a size of 1,300 mm in width × 700 mm in height, and weighs as heavy as about 20 kg. Therefore, unless the opening/closing trajectory of the door stays constant, there are problems that the door may not only become an obstacle to an operator to open or close the door, but it may be dangerous to the operator and may make the operator feel anxious. It is also required to have a larger installation space for its opening and closing movement.

As to the door 90 used as an exterior cover of an apparatus shown in Fig. 12, in the similar manner, there are problems that this door may be dangerous to an operator and may make the operator feel anxious as its heavy weight of approximately 20 kg comes over his/her head, as well as it is required to have a larger installation space for its opening and closing movement. Since there is a possibility that the door 90 drops onto an operator's head if the damper 93 in particular is damaged, a locking mechanism (one touch stay) for preventing this is necessary, thereby making the operability to open and close the door 90 complex. There is another problem that an operator needs to move toward right-hand side or left-hand side so as not to hinder the movements of the door 90 when the door 90 is opened or closed, and hence the operability of the apparatus is further deteriorated.

The features of the pre-characterising clause of claim 1 are known from JP 64 005 484 U.

Accordingly, the present invention aims to provide a lighter door with a constant opening/closing trajectory, which requires a limited installation space and is capable of easy handling. The door may be opened and closed safely, thereby solve the problems described above.

According to the present invention, this object is solved by a door used as an exterior cover for an apparatus, comprising a first lid rotatably supported by said apparatus, a second lid rotatably supported by said first lid, a damper supporting said first lid when said door is opened, and a link rotatably supported by said apparatus and said second lid, thereby connecting said apparatus and said second lid each other, wherein said first lid comprises a plate member and frame members surrounding said plate member for firmly holding the same from four sides, said second lid comprises a plastic plate and frame members surrounding said plastic plate for firmly holding the same from four sides, said frame members located at the right side end and the left side end of said second lid are formed in an arc shape with the center portions thereof projecting toward or away from said apparatus, and said plastic plate is elastically deformed and held along said frame members located at said both ends and formed in the arc shape.

A door according to a preferred embodiment of the present invention is characterized in that the radius of the arc of the arc shaped frame members is approximately 2,000 mm. This is a desired condition to obtain the effects described above.

A door according to another preferred embodiment of the present invention is characterized in that the cross section of the frame member rotatably supporting the second lid among the frame members forming the first lid, and the cross section of the frame member rotatably supporting the first lid among the frame members forming the second lid are formed so as to engage mutually. By this structure, the first lid and second lid are rotatably supported by the engagement of the frame members of the first and second lids. This structure makes it possible to reduce the number of components forming the door and to improve the appearance of the door as well.

A door according to another preferred embodiment of the present invention is characterizes in that the frame member located at the lower end among the frame members forming the second lid includes handles formed in the inner and outer surfaces relative to the apparatus. This structure makes it possible even for a short operator to easily open and close the door.

A door according to another preferred embodiment of the present invention is characterized in that the handles are formed in a ring shape and attached to the frame member located at the lower end of the second lid so as to be movable toward or away from the apparatus. This structure allows an short operator to easily open and close the door since the handles slide downward by their own weight when the second lid is opened.

A door according to another preferred embodiment of the present invention is characterizes in that the handles formed in a ring shape are attached to the frame member located at the lower end of the second lid together with retaining rings in such a manner that inward projection of the handle on the inner side relative to the apparatus is longer than outward projection of the handle on the outer side. This structure allows an operator to easily open and close the door, in that a tall operator can remain unhindered during the work by using the outer handle, while a shorter operator can reach the inner handle easily.

A door according to another preferred embodiment of the present invention is characterized in that the frame members of the second lid are made of a conductive material, an electromagnetic wave-proof shield is pasted to one surface or the both surfaces of said plastic plate, and that a conductive elastic member is disposed in contact between the frame members and the plastic plate. By means of this structure, the plastic plate and the frame members of the second lid, as well as the housing in contact with the frame members are at the same electric potential. Therefore, it is possible to prevent malfunction of other equipments and/or the apparatus itself due to unnecessary radiation of an electromagnetic wave from the second lid.

A door according to another preferred embodiment of the present invention is characterized in that the frame members of the second lid are made from conductive material, the plastic plate is formed by two sheets of plates between which an electromagnetic wave-proof shield is firmly held, and that a conductive elastic member is disposed in contact between the frame members and the plastic plate. This is for achieving a similar effect to that of the tenth aspect described above. This structure prevents an operator from damaging the shield with a tool or the like by mistake since the electromagnetic wave-proof shield is firmly held between the two plates. This may allows the electromagnetic wave-proof shield to keep its shielding capability for a longer period.

A door according to another preferred embodiment of the present invention is characterized in that the dimensions of the link connecting the apparatus and the second lid are arranged in such a manner that the second lid and the first lid are folded together when the door is opened. This structure makes the projection of the door during its opening and closing smaller, thereby improves the operability and reduces the working space.

### BRIEF DESCRIPTION OF THE DRAWINGS

Fig. 1 is a perspective view of a component mounting apparatus comprising a door according to a first preferred embodiment of the present invention.
Fig. 2 is a perspective view showing a state where the door according to the first preferred embodiment of the present invention is closed.
Fig. 3 is a detailed cross sectional view of a frame member of the door according to the first preferred embodiment of the present invention.
Fig. 4 is a detailed cross sectional view showing a state where the frame member of the door according to the first preferred embodiment of the present invention firmly holds a plate member.
Fig. 5 is a detailed cross sectional view showing a hinge portion of the door according to the first preferred embodiment of the present invention.
Fig. 6 is a perspective view showing a state where the door according to the first preferred embodiment of the present invention is opened.
Fig. 7 is a cross sectional view showing an opening/closing trajectory of the door according to the first preferred embodiment of the present invention.
Fig. 8 is a perspective view showing a state where a door according to a second preferred embodiment of the present invention is closed.
Fig. 9 is a detailed view of a handle attaching portion of the door according to the second preferred embodiment of the present invention.
Fig. 10 is another detailed view of a different handle attaching portion of the door according to the second preferred embodiment of the present invention.
Fig. 11 is a cross sectional view of a door of a cold insulation container for vehicle according to prior art.
Fig. 12 is a cross sectional view of a door for an exterior cover of a component mounting apparatus according to prior art.

### DETAILED DESCRIPTION OF THE EMBODIMENTS

Preferred embodiments of a door according to the present invention will now be described with reference to associated drawings. Although the description below is directed to a component mounting apparatus for mounting at a high speed a number of chip components onto a printed circuit substrate to be used for electronic equipment such as a computer or a video camera, application of the present invention is not limited to such an apparatus.

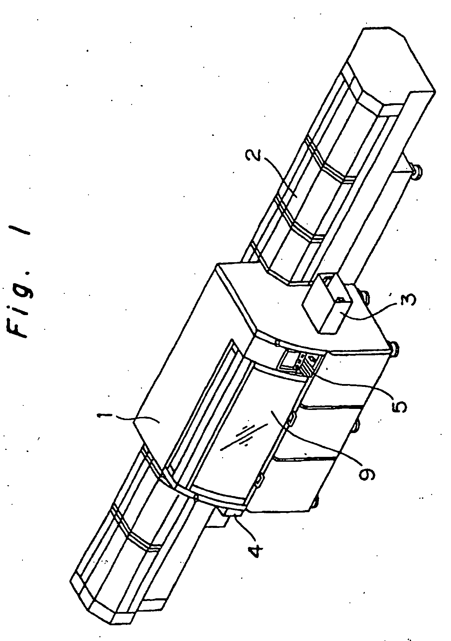

Fig. 1 shows an overall view of such a component mounting apparatus mentioned above. Denoted by 1 is a main body of the component mounting apparatus. Inside the main body 1, a mounting head (not shown) sucks chip components fed from a component supplying portion 2. When the components are supplied, these components are contained and held in a tape, and then the components are mounted at predetermined locations on an electronic circuit substrate loaded in the apparatus by a loader 3. After all necessary chip components are mounted, the electronic circuit substrate is unloaded from an unloader 4. This mounting process conducted at a high speed is controlled by a main control panel 5.

Since the above mounting process is carried out at a high speed, it accompanies a risk of danger. Accordingly, the main body of the component mounting apparatus is normally shielded by an exterior cover (hereinafter referred to as a "door") 9, so as to ensure the safety for an operator, to reject the entry of dust into the main body, and at the same time to block noises toward outside. A window portion formed by a transparent plastic plate or the like is arranged in the front surface of the door, thereby allowing an operator to check the state inside of the main body 1.

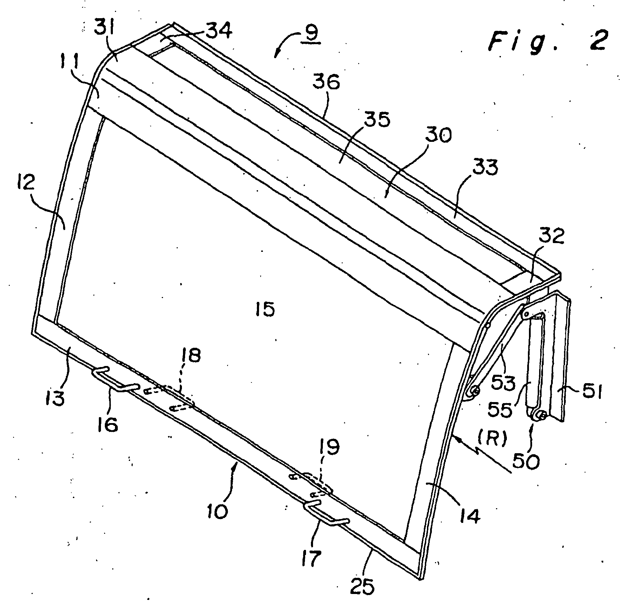

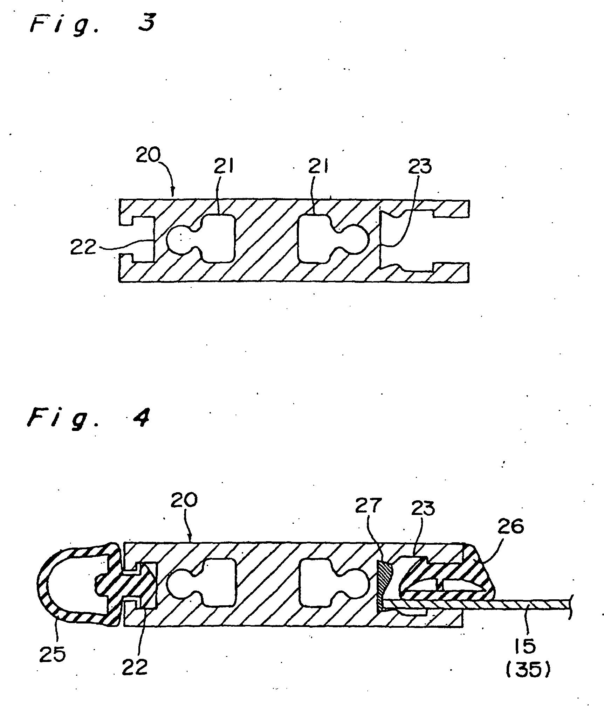

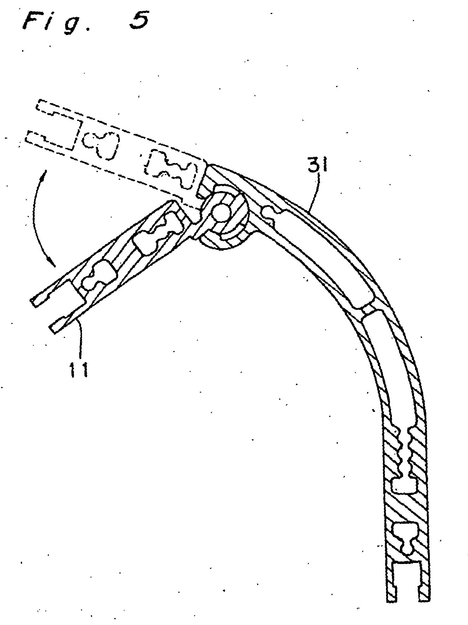

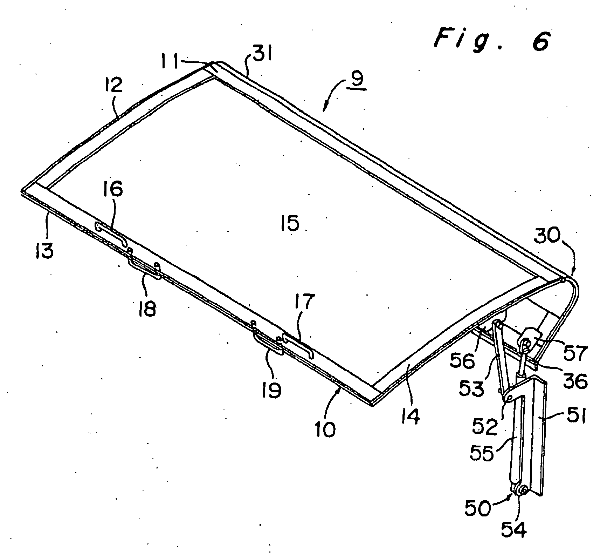

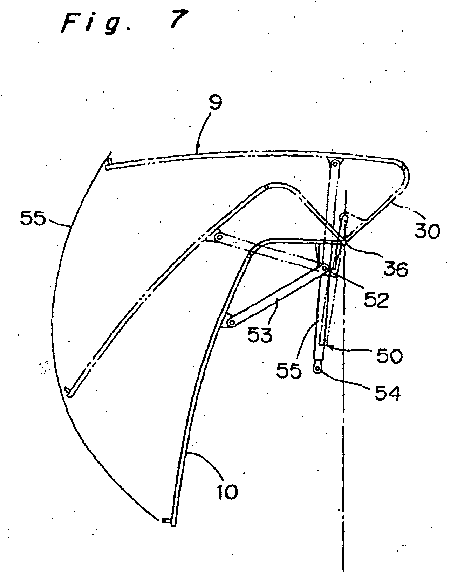

Referring to associated drawings, a description will now be given to a first preferred embodiment of the present invention, which is related to a door used as an exterior cover of an apparatus like the one mentioned above. Figs. 2 through 7 show a door according to the first preferred embodiment. Fig. 2 is a perspective view showing a state where the door according to the present invention is closed. Fig. 3 is a detailed cross sectional view of a frame member used as a frame of this door. Fig. 4 is a detailed cross sectional view showing a state where the frame member firmly holds a plate member. Fig. 5 is a detailed cross sectional view of a hinge portion of the door. Fig. 6 is a perspective view showing a state where the door is open. Fig. 7 is a cross sectional view showing an opening/closing trajectory of the door.

In Fig. 2, denoted by 9 is a folding door according to the first preferred embodiment, mainly formed by a second lid (hereinafter referred to as a "front door") 10, a first lid (hereinafter referred to as a "top lid") 30 and a guide element 50. First, in the front door 10, frame members 11, 12, 13 and 14 form an outer frame surrounding a plastic plate 15 for firmly holding the plate 15 in a central portion of the front door 10 for forming a window. This plastic plate 15 is required to be transparency to secure visibility inside, and a certain level of strength to prevent foreign matters from scattering from inside for protecting an operator, and further preferably, a shielding capability for blocking disturbance induced by an electromagnetic wave. Toward this end, a transparent or smoked ABS or polycarbonate plate with strength achieved by a predetermined thickness may be used. In an effort to realize such a shielding capability against an electromagnetic wave, it is further preferable that a conductive mesh is pasted to one surface or the both surfaces of the plastic plate 15.

The frame members 11, 12, 13 and 14, surrounding and firmly holding the plastic plate 15 from four sides and forming the outer frame of the front door 10, are preferably made from an extruded aluminum. Fig. 3 shows a general cross sectional shape 20 of such an extruded aluminum. Except for the frame member 11 forming a hinge portion described later, this shape is applied to the other frame members 12, 13 and 14. While cavities 21 for reducing weight are formed in this cross section, the shape of the cavities is not limited to the one shown in Fig. 3. Grooves 22 and 23 at the both end portions in Fig. 3 are formed for the purpose of holding other components, respectively, as shown in Fig. 4.

In Fig. 4, denoted by 20 is the same cross section of the frame members 12, 13 and 14 as shown in Fig. 3. A protection cushion 25 is fit into the groove 22 located at the left side end of the frame member. The cushion 25 covers three directions of the outer frame of the front door 10 as shown in Fig. 2, so as to protect an operator. The right-hand side in the cross section 20 in Fig. 4 shows how each frame member firmly holds the plastic plate 15. In the illustrated structure, the plastic plate 15 is fit into the groove 23 at right side end and pressed by an elastic member 26 preferably made from rubber. The use of the elastic member 26 makes it easy to fix the plastic plate 15 as well as preventing a fluttering sound created by vibrations of the apparatus.

Filled in the space with the plastic plate 15 inside the groove 23 is a conductive elastic member 27 preferably made of a conductive sponge. Coming in contact with the conductive mesh pasted to the surface of the plastic plate 15, the conductive elastic member 27 is conducted. The conduction allows a housing of the apparatus and the front door 10 to be at the same electric potential, thereby preventing malfunction of other equipment and/or the apparatus itself due to unnecessary radiation of an electromagnetic wave from the door 9. Although the frame member 11 forming a hinge portion described later has a different cross section, the shape of the groove 23 for firmly holding the plastic plate 15 is the same.

According to the first preferred embodiment, the frame members 12 and 14 extending in the vertical direction in Fig. 2 are formed in the shape of an arc, where a central portion in a longitudinal direction of each frame member projects away from the main body of the apparatus. The radius R of the arc is preferably about 2,000 mm. Since the frame members 12 and 14 are arc-shaped and the plastic plate 15 is accordingly elastically deformed into the shape of an arc, the visibility through the window is improved, play is obviated, and the rigidity is increased owing to the arc shape. Therefore, the plastic plate 15 with thinner thickness may be used, which may lead to a reduction in weight. The frame members 12 and 14 can be easily formed into the shape of an arc by stamping work, etc. Even if the frame members 12 and 14 are formed in the shape of an arc where a central portion in a longitudinal direction of each frame member is closer to the main body of the apparatus compared to the other portions thereof, such an arc shape realizes a similar effect as above.

Further, in Fig. 2, handles 16 and 17 are externally disposed to the frame member 13 while handles 18 and 19 are internally disposed to the frame member 13. This allows an operator to easily reach to these handles with hands, hence an operation of opening and closing the door becomes easy.

The top lid 30 forming the folding door 9 will now be described with reference to Fig. 2. The structure of the top lid 30 is substantially the same as the front door 10 described above. That is, frame members 31, 32, 33 and 34 form an outer frame, and the outer frame surrounds a plate member 35 for firmly holding the plate member 35 in a central portion within the outer frame. Although the plate member 35 held by the top lid 30 is preferably a plated or painted metal plate, it may be a plastic plate like the front door 10. In case of a plastic plate, a conductive mesh is preferably pasted to at least one surface of the plate member 35 for the purpose of ensuring shielding against an electromagnetic wave. As in the case of the front door 10, the frame members 31, 32, 33 and 34 forming the outer frame are preferably made from extruded aluminum. Except for the frame member 31 having a hinge portion, general cross sections and a method of attaching the plate member are similar to those shown in Figs. 3 and 4 illustrating the front door 10.

Fig. 5 shows cross sections of the frame members 11 and 31 forming the hinge portions between the front door 10 and the top lid 30 and shows a state where these two elements are connected to each other. In Fig. 5, the frame member 11 corresponds to the outer frame forming the hinge of the front door 10, while the frame member 31 corresponds to the outer frame forming the hinge of the top lid 30, both of which are preferably made from extruded aluminum. In Fig. 5, a partially notched cylindrical column is formed in the hinge portion of the frame member 11, while a partially notched cylindrical bore for accepting the column is formed in the frame member 31. With these two slid relative to each other in the axial direction of the column or the bore, the hinge is easily formed between the two members. Of course, the column and the bore may be arranged in a reversed manner. Since this structure eliminates a separately formed hinge, the number of components is reduced, screws and the like become unnecessary, and the appearance is accordingly improved.

Although a hinge 36 for linkage to the housing of the apparatus is attached to the frame member 33 among the frame members of the top lid 30 in Fig. 2, this is realized by inserting the hinge 36 to the groove (denoted by 22 in Fig. 3) on the opposite side to the groove firmly holding the plate member within the cross section of the frame member 33. With this fixed to the housing of the apparatus, it is possible to open and close the top lid 30.

The guide element 50 forming the folding door will now be described with reference to Fig. 6. Fig. 6 shows a state where the folding door 9 according to the first preferred embodiment is opened. In Fig. 6, the guide element 50 includes a bracket 51 with L-shaped cross section and fixed to the housing of the apparatus; a link 53 rotatably supported by a hole 52 located on one side of the L-shaped cross section of the bracket 51 at a different position from the axis of the hinge 36 rotatably supporting the housing of the apparatus and the folding door 9, and restricting movements of the front door 10 so that the front door 10 and the top lid 30 get folded together; a damper 55 rotatably supported by a hole 54 on one side of the L-shaped cross section of the bracket 51; a link bracket 56 rotatably supporting the link 53 by means of the front door 10; and a damper bracket 57 rotatably supporting the damper 55 by means of the top lid 30. The hinge 36 as well, rotatably supporting the housing of the apparatus and the top lid 30, forms a part of the guide element.

Fig. 7 shows a trajectory how the folding door 9 travels during opening or closing under restriction of the guide element 50 structured as above As shown in Fig. 7, since the link 53 rotates about the hole 52 located off the hinge rotation axis 36 for opening and closing the top lid 30, as the door 9 is opened from its closed state, the front door 10 and the top lid 30 of the folding door 9 get folded together. Hence, the trajectory 55 followed by the edge portions of the folding door 9 bulges far less than a trajectory of a one-piece door. Further, the folding door 9, when completely open, can shift its center of gravity toward the main body of the apparatus. Therefore, even if the damper 55 is broken, the door 9 will not drop upon the operator's head..In addition, since the guide element 50 ensures that opening/closing trajectories of the front door 10 and the top lid 30 of the folding door 9 remain always constant, the door 9 does not make an operator feel anxious during its opening and closing movement nor obstruct the operator, and needs only a small installation space.

Although the foregoing has described the plastic plate 15 formed as one sheet of plastic plate with a conductive mesh pasted on one surface thereof, the plastic plate 15 may be formed by two sheets of plastic plates with half thickness between which a conductive mesh are held. Since the plastic plate 15 firmly holds the conductive mesh inside, an operator does not damage the conductive mesh with a tool or the like by mistake, and therefore, the conductive mesh can keep its shielding capability for a longer period.

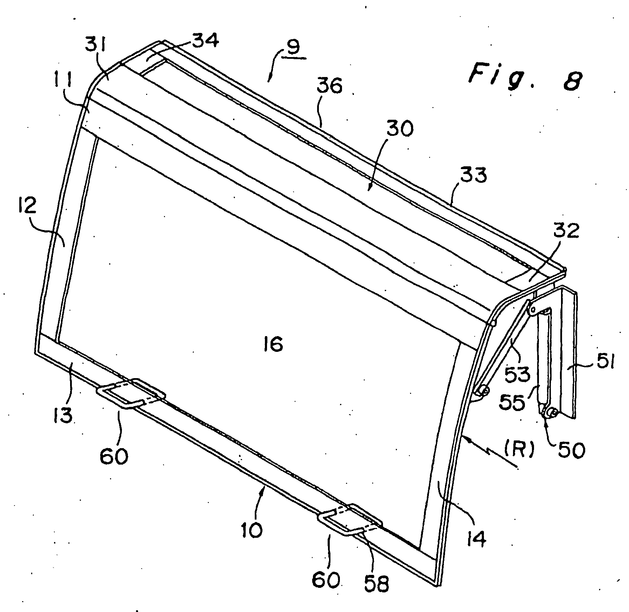

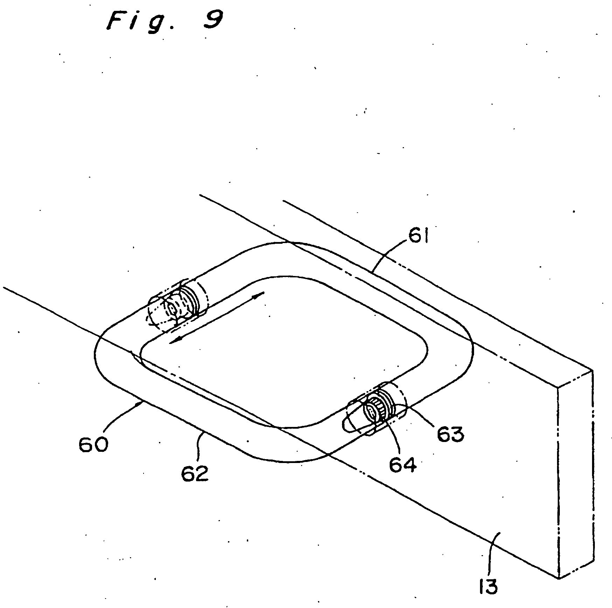

A second preferred embodiment of a door according to the present invention will now be described with reference to associated drawings. The second preferred embodiment is directed to an improvement of handles attached to a front door of a folding door. Fig. 8 shows the details of a door according to the second preferred embodiment, and Fig. 9 shows the details of a handle attaching portion of the door according to the second preferred embodiment. The structures other than handles described below are similar to those described earlier in relation to the first preferred embodiment, and duplicated description will be avoided by giving like reference numerals to the like elements.

In Fig. 8, through holes denoted by 58 are formed in a handle attaching portion of the frame member 13 forming the front door 10. In the second preferred embodiment, handles 60 located inside and outside of the frame member 13 are attached via the through holes 58 so that the handles 60 may be freely moved inwardly and outwardly. Fig. 9 shows an example of how the handle 60 having such a structure is assembled. In Fig. 9, among members forming the handle 60, an inner handle 61 for instance is formed by a pipe bent in the shape of letter "U," and internal threads for fastening bolts are formed inside both end portions of the inner handle 61. Meanwhile, an outer handle 62 as well is formed by a pipe bent in the shape of letter "U." The both end portions of the outer handle 62 are partially mashed into a crescent shape, and washer-like members 63 are welded to the crescent end surfaces. In order to fix the inner and outer handles 61 and 62, bolts 64 are inserted into the washer-like members 63 from the outer handle 62, and screwed and fastened into the internal threads of the inner handle 61 with an inner wrench.

As the handles 60 have such a structure, when the door is open, the handles on the inner side of the door may project farther as compared with the door according to the first preferred embodiment described earlier. Hence, even a short operator can easily reach the handles of the open door with hands and easily open and close the door.

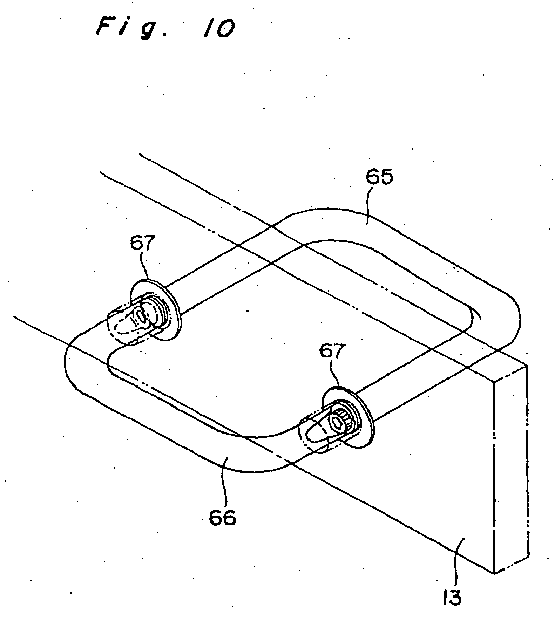

The foregoing has described that the two handles 61 and 62 are fit with each other in a ring shape. In a case shown in Fig. 10, projection of an inner handle 65 from the frame member 13 is arranged to be longer than projection of an outer handle 66 on the outer side of the frame member 13 by using a retaining ring 67 inserted between the two handles and disposed on the inner side of the frame member 13. This ensures that the handle 65 on the inner side of the frame member 13 projects longer than the handle 66 on the outer side of the frame member 13 does, thereby allowing a tall operator to remain unhindered during the work by using the outer handle 66, while allowing a shorter operator to reach the inner handle, and making it possible for the shorter operator to open and close the door more easily.

### EFFECT OF THE INVENTION

As described above, a door according to the present invention includes the top lid rotatably fixed to the upper end portion of the apparatus, the front door rotatably fixed to the top lid, the damper supporting the top lid at upward open position, and the link connecting the apparatus with the front door. Since this ensures that an opening/closing trajectory of the front door always remains constant, the door can be easily and safely opened and closed.

Further, since the frame members in vertical direction at both ends of the front door are shaped like an arc and the plastic plate is firmly held along the frame members located at the both ends, the plastic plate as well is elastically deformed into the shape of an arc, thereby rigidity of the plastic plate is improved. Accordingly, the plastic plate with thinner thickness and lighter weight may be utilized.

Further, since the frame member at the front end of the top lid and the frame member at the upper end of the front door can be engaged with each other in a longitudinal direction and are rotatably supported, a hinge is not necessary, thereby making it possible to reduce the number of components. Since a screw and the like are not necessary for this structure, appearance is accordingly improved. In addition, since the handles are provided to the inner and the outer surfaces of the frame member at the lower end of the front door, a short operator can easily open and close the door.

Further, the frame members of the front door are made of a conductive material, the electromagnetic wave-proof shield is pasted to one surface or the both surfaces of said plastic plate, and the conductive elastic member is disposed in contact between the frame members and the plastic plate. Hence, there is an effect to enhance safety.

Further, the link to connect the apparatus with the front door and to keep the opening/closing trajectory of the front door always constant is properly disposed so that the front door 10 and the top lid 30 are folded together Hence, it is possible to minimize projection of the front door during opening and closing of the door, thereby reducing a working space, and making it easier for an operator to open and close the door.

## Claims

1. A door (9) used as an exterior cover for an apparatus, comprising:
a first lid (30) rotatably supported by said apparatus;
a second lid (10) rotatably supported by said first lid (30);
a damper (55) supporting said first lid (30) when said door (9) is opened; and
a link (53) rotatably supported by said apparatus and said second lid (10), thereby connecting said apparatus and said second lid (10) each other,
**characterized in that** said first lid (30) comprises a plate member (35) and frame members (31, 32, 33, 34) surrounding said plate member (35) for firmly holding the same from four sides,
said second lid (10) comprises a plastic plate (15) and frame members (11, 12, 13, 14) surrounding said plastic plate (15) for firmly holding the same from four sides,
said frame members (12, 14) located at the right side end and the left side end of said second lid (10) are formed in an arc shape with the center portions thereof projecting toward or away from said apparatus,
and said plastic plate (15) is elastically deformed and held along said frame members (12, 14) located at said both ends and formed in the arc shape.

2. The door as set forth in Claim 1, **characterized in that** the radius of the arc of said frame members (12, 14) formed in the arc shape is approximately 2,000 mm.

3. The door as set forth in Claim 1, **characterized in that** the cross section of said frame member (31) rotatably supporting said second lid (10) among said frame members (31, 32, 33, 34) forming said first lid (30), and the cross section of said frame member (11) rotatably supporting said first lid (30) among said frame members (11, 12, 13, 14) forming said second lid (10) are formed so as to engage mutually, and said first lid (30) and said second lid (10) are rotatably supported by the engagement of said frame members (11, 31) of said first and second lids.

4. The door as set forth in any one of Claims 1 through 3, **characterized in that** said frame member (13) located at the lower end among said frame members (11, 12, 13, 14) forming said second lid (10) comprises handles (16, 17, 18, 19) formed in inner and outer surfaces relative to said apparatus.

5. The door as set forth in Claim 4, **characterized in that** said handles (61, 62) are formed in a ring shape and attached to said frame member (13) located at the lower end of said second lid (10) in such a manner that said handles (61, 62) are movable toward or away from said apparatus.

6. The door as set forth in Claim 5, **characterized in that** said handles (65, 66) formed in a ring shape are attached to said frame member (13) located at the lower end of said second lid (10) together with retaining rings (67) in such a manner that each of said handles (65) on the inner side relative to said apparatus projects longer than each of said handles (66) on the outer side relative to said apparatus does.

7. The door as set forth in any one of Claims 1 through 6, **characterized in that** said frame members (11, 12, 13, 14) of said second lid (10) are made from conductive material, an electromagnetic wave-proof shield is pasted to one surface or the both surfaces of said plastic plate (15), and a conductive elastic member (27) is disposed in contact between said frame members (11, 12, 13, 14) and said plastic plate (15).

8. The door as set forth in any one of Claims 1 through 6, **characterized in that** said frame members (11, 12, 13, 14) of said second lid (10) are made from conductive material, said plastic plate (15) is formed by two sheets of plates, an electromagnetic wave-proof shield is firmly held between the two sheets of plates, and a conductive elastic member (27) is disposed in contact between said frame members (11, 12, 13, 14) and said plastic plate (15).

9. The door as set forth in any one of Claims 1 through 8, **characterized in that** said link (53) connecting said apparatus and said second lid (10) is arranged in such a manner that said second lid (10) and said first lid (30) are folded together when said door (9) is opened.

## Patentansprüche

1. Tür (9), verwendet als eine äußere Abdeckung für eine Vorrichtung, umfassend:
einen ersten Deckel (30), schwenkbar gehalten durch die Vorrichtung;
einen zweiten Deckel (10), schwenkbar gehalten durch den ersten Deckel (30);
einen Dämpfer (55), der den ersten Deckel (30) hält, wenn die Tür (9) geöffnet ist;
und
ein Verbindungsstück (53), schwenkbar gehalten durch die Vorrichtung und den zweiten Deckel (10), welches auf diese Weise die Vorrichtung und den zweiten Deckel (10) miteinander verbindet,
**dadurch gekennzeichnet, dass** der erste Deckel (30) ein Plattenelement (35) sowie das Plattenelement (35) umgebende Rahmenelemente (31, 32, 33, 34) umfasst, um dasselbe von vier Seiten fest zu halten,
der zweite Deckel (10) eine Kunststoffplatte (15) sowie die Kunststoffplatte (15) umgebende Rahmenelemente (11, 12, 13, 14) umfasst, um dieselbe von vier Seiten fest zu halten;
die Rahmenelemente (12, 14), welche an dem rechten Ende und dem linken Ende des zweiten Deckels (10) gelegen sind, in einer Bogenform gebildet sind, wobei die mittleren Abschnitte von dieser in Richtung auf die Vorrichtung oder weg von ihr hervorstehen,
und die Kunststoffplatte (15) elastisch verformt ist und längs der Rahmenelemente (12, 14) gehalten wird, welche an den beiden Enden gelegen und in der Bogenform gebildet sind.

2. Tür nach Anspruch 1, **dadurch gekennzeichnet, dass** der Radius des Bogens der in der Bogenform gebildeten Rahmenelemente (12, 14) in etwa 2.000 mm beträgt.

3. Tür nach Anspruch 1, **dadurch gekennzeichnet, dass** der Querschnitt des Rahmenelements (31), welches den zweiten Deckel (10) schwenkbar hält, von den Rahmenelementen (31, 32, 33, 34), die den ersten Deckel (30) bilden, und der Querschnitt des Rahmenelements (11), welches den ersten Deckel (30) schwenkbar hält, von den Rahmenelementen (11, 12, 13, 14), die den zweiten Deckel (10) bilden, gebildet sind, um gegenseitig ineinander zu greifen, und der erste Deckel (30) und der zweite Deckel (10) durch den Eingriff der Rahmenelemente (11, 31) der ersten und zweiten Deckel schwenkbar gestützt sind.

4. Tür nach einem der Ansprüche 1 bis 3, **dadurch gekennzeichnet, dass** das Rahmenteil (13), das von den Rahmenelementen (11, 12, 13, 14), die den zweiten Deckel (10) bilden, an dem unteren Ende gelegen ist, Griffe (16, 17, 18, 19) umfasst, welche in inneren und äußeren Oberflächen in Bezug zu der Vorrichtung gebildet sind.

5. Tür nach Anspruch 4, **dadurch gekennzeichnet, dass** die Griffe (61, 62) in einer Ringform gebildet sind und an dem Rahmenelement (13), welches an dem unteren Ende des zweiten Deckels (10) gelegen ist, in einer solchen Weise befestigt sind, dass die Griffe (61, 62) in Richtung auf die Vorrichtung oder weg von dieser bewegbar sind.

6. Tür nach Anspruch 5, **dadurch gekennzeichnet, dass** die in einer Ringform gebildeten Griffe (65, 66) an dem Rahmenelement (13), welches an dem unteren Ende des zweiten Deckels (10) gelegen ist, zusammen mit Halteringen (67) befestigt sind, in einer solchen Weise, dass jeder der Griffe (65) auf der Innenseite in Bezug zu der Vorrichtung weiter hervorsteht als jeder der Griffe (66) auf der Außenseite in Bezug zu der Vorrichtung hervorsteht.

7. Tür nach einem der Ansprüche 1 bis 6, **dadurch gekennzeichnet, dass** die Rahmenelemente (11, 12, 13, 14) des zweiten Deckels (10) aus leitfähigem Material gefertigt sind, ein für elektromagnetische Wellen undurchlässiges Schild auf eine Oberfläche oder beide Oberflächen der Kunststoffplatte (15) geklebt ist und ein leitfähiges elastisches Element (27) in Kontakt zwischen den Rahmenelementen (11, 12, 13, 14) und der Kunststoffplatte (15) eingerichtet ist.

8. Tür nach einem der Ansprüche 1 bis 6, **dadurch gekennzeichnet, dass** die Rahmenelemente (11, 12, 13, 14) des zweiten Deckels (10) aus leitfähigem Material gebildet sind, die Kunststoffplatte (15) durch zwei Schichten von Platten gebildet ist, ein für elektromagnetische Wellen undurchlässiges Schild fest zwischen den zwei Schichten von Platten gehalten wird, und ein leitfähiges elastisches Element (27) in Kontakt zwischen den Rahmenelementen (11, 12, 13, 14) und der Kunststoffplatte (15) eingerichtet ist.

9. Tür nach einem der Ansprüche 1 bis 8, **dadurch gekennzeichnet, dass** das Verbindungsstück (53), welches die Vorrichtung und den zweiten Deckel (10) miteinander verbindet, in einer solchen Weise eingerichtet ist, dass der zweite Deckel (10) und der erste Deckel (30) zusammengefaltet sind, wenn die Tür (9) geöffnet ist.

## Revendications

1. Porte (9) utilisée comme capot extérieur d'un dispositif, comprenant :
un premier couvercle (30) supporté de manière rotative par ledit dispositif ;
un deuxième couvercle (10) supporté de manière rotative par ledit premier couvercle (30) ;
un amortisseur (55) supportant ledit premier couvercle (30) quand ladite porte (9) est ouverte ; et
une liaison (53) supportée de manière rotative par ledit dispositif et ledit deuxième couvercle (10), reliant ainsi ledit dispositif et ledit deuxième couvercle (10) l'un à l'autre,
**caractérisé en ce que** ledit premier couvercle (30) comprend un élément de plaque (35) et des éléments de châssis (31, 32, 33, 34) entourant ledit élément de plaque (35) pour maintenir fermement celui-ci depuis les quatre côtés,
ledit deuxième couvercle (10) comprend une plaque en plastique (15) et des éléments de châssis (11, 12, 13, 14) entourant ladite plaque en plastique (15) pour maintenir fermement celle-ci depuis les quatre côtés,
lesdits éléments de châssis (12, 14) situés au niveau de l'extrémité latérale droite et l'extrémité latérale gauche dudit deuxième couvercle (10) sont formés en une forme d'arc avec les parties centrales de ceux-ci se projetant en direction et en direction opposée dudit dispositif,
et ladite plaque en plastique (15) est déformée et maintenue de manière élastique le long desdits éléments de châssis (12, 14) situés au niveau desdites deux extrémités et formés en la forme d'arc.

2. Porte selon la revendication 1, **caractérisée en ce que** le rayon de l'arc desdits éléments de châssis (12, 14) formés en la forme d'arc est approximativement de 2,000 mm.

3. Porte selon la revendication 1, **caractérisée en ce que** la coupe transversale dudit élément (31) supportant de manière rotative ledit deuxième couvercle (10) parmi lesdits éléments de châssis (31, 32, 33, 34) formant ledit premier couvercle (30), et la coupe transversale dudit élément de châssis (11) supportant de manière rotative ledit premier couvercle (30) parmi lesdits éléments de châssis (11, 12, 13, 14) formant ledit deuxième couvercle (10) sont formés de manière à venir mutuellement en prise, et ledit premier couvercle (30) et ledit deuxième couvercle (10) sont supportés de manière rotative par la prise desdits éléments de châssis (11, 31) desdits premier et deuxième couvercles.

4. Porte selon l'une quelconque des revendications 1 à 3, **caractérisée en ce que** ledit élément de châssis (13) situé au niveau de l'extrémité inférieure parmi lesdits éléments de châssis (11, 12, 13, 14) formant ledit deuxième couvercle (10) comprend des poignées (16, 17, 18, 19) formées dans des surfaces intérieure et extérieure par rapport audit dispositif.

5. Porte selon la revendication 4, **caractérisée en ce que** lesdites poignées (61, 62) sont formées en une forme d'anneau et attachées audit élément de châssis (13) situé au niveau de l'extrémité inférieure dudit deuxième couvercle (10) de telle manière que lesdites poignées (61, 62) sont amovibles en direction et en direction opposée dudit dispositif.

6. Porte selon la revendication 5, **caractérisée en ce que** lesdites poignées (65, 66) formées en une forme d'anneau sont attachées audit élément de châssis (13) situé au niveau de l'extrémité inférieure dudit deuxième couvercle (10) conjointement à des bagues de retenue (67) de telle manière que chacune desdites poignées (65) sur le côté intérieur par rapport audit dispositif se projète plus loin que chacune desdites poignées (66) sur le côté extérieur par rapport audit dispositif.

7. Porte selon l'une quelconque des revendications 1 à 6, **caractérisée en ce que** lesdits éléments de châssis (11, 12, 13, 14) dudit deuxième couvercle (10) sont constitués d'un matériau conducteur, un écran résistant aux ondes électromagnétiques est collé sur une surface ou les deux surfaces de ladite plaque en plastique (15), et un élément élastique conducteur (27) est agencé en contact entre lesdits éléments de châssis (11, 12, 13, 14) et ladite plaque en plastique (15).

8. Porte selon l'une quelconque des revendications 1 à 6, **caractérisée en ce que** lesdits éléments de châssis (11, 12, 13, 14) dudit deuxième couvercle (10) sont constitués d'un matériau conducteur, ladite plaque en plastique (15) est formée par deux feuilles de plaques, un écran résistant aux ondes électromagnétiques est maintenu fermement entre les deux feuilles de plaques, et un élément élastique conducteur (27) est agencé en contact entre lesdits éléments de châssis (11, 12, 13, 14) et ladite plaque en plastique (15).

9. Porte selon l'une quelconque des revendications 1 à 8, **caractérisée en ce que** ladite liaison (53) reliant ledit dispositif et ledit deuxième couvercle (10) est agencé de telle manière que ledit deuxième couvercle (10) et ledit premier couvercle (30) sont pliés conjointement quand ladite porte (9) est ouverte.
